# FASCICULE DE BREVET EUROPEEN

(11) **EP 0 604 255 B1**
(45) Date de publication et mention de la délivrance du brevet: **21.08.1996**
(21) Numéro de dépôt: 93402920.8
(22) Date de dépôt: 20.12.1993
(51) Int. Cl.: F03C 1/04, F16J 9/00

(54) **Piston de moteur hydraulique**
Hydraulikmotorkolben
Hydraulic motor piston

(30) Priorité: 22.12.1992 FR 9215491
(43) Date de publication de la demande: 29.06.1994
(73) Titulaire: POCLAIN HYDRAULICS, F-60411 Verberie Cédex (FR)
(72) Inventeur: Caron, Paul A., F-60320 Saint Sauveur (FR); Martin, Louis E., F-60200 Compiegne (FR)
(74) Mandataire: Hasenrader, Hubert

(56) Documents cités:
- EP-A- 0 487 394
- BE-A- 647 576
- US-A- 3 943 826

## Description

Dans un moteur hydraulique comportant un bloc-cylindres à l'intérieur duquel est ménagé au moins un premier cylindre délimité par une première surface cylindrique, il est connu de concevoir un piston qui comporte au moins un premier corps de piston qui est monté coulissant à l'intérieur dudit premier cylindre parallèlement à une direction de coulissement, qui possède un axe de piston parallèle à la direction de coulissement, et qui présente une deuxième surface cylindrique disposée en regard de ladite première surface cylindrique et une face transversale délimitant à l'intérieur du premier cylindre une chambre de travail d'un fluide susceptible de contenir sélectivement un fluide sous pression, ledit premier corps de piston possédant une gorge disposée transversalement par rapport à l'axe de piston et susceptible de recevoir un organe d'étanchéité disposé entre ce premier corps de piston et ladite première surface cylindrique, la deuxième surface cylindrique du premier corps de piston comprenant une première et une deuxième partie disposées de part et d'autre de ladite gorge, la première partie de la deuxième surface cylindrique s'étendant à partir de la gorge dans la direction opposée à ladite face transversale, présentant, au jeu près permettant le coulissement du premier corps de piston, des dimensions radiales égales à celles de la première surface cylindrique, et constituant ainsi un élément de guidage du premier corps de piston à l'intérieur du premier cylindre, un tel moteur est déjà connu du document EP-A-0 487 394.

Selon l'invention, la deuxième partie de la deuxième surface cylindrique s'étend entre lesdites gorge et face transversales et présente des dimensions radiales inférieures à celles de ladite première partie de la deuxième surface cylindrique et un deuxième cylindre est ménagé dans ledit bloc-cylindres et a des dimensions radiales inférieures à celles du premier cylindre et inférieures également à celles de la deuxième surface cylindrique du premier corps de piston, cependant que ledit piston comprend un deuxième corps de piston, qui est solidaire du premier corps de piston et le prolonge à partir de ladite face transversale de ce premier corps de piston, qui est monté coulissant dans le deuxième cylindre, qui, au jeu près permettant le coulissement de ce deuxième corps de piston dans le deuxième cylindre, présente des dimensions radiales égales à celles du deuxième cylindre, et qui, ainsi, constitue un élément de guidage complémentaire du coulissement du piston par rapport au deuxième cylindre.

Les avantageuses dispositions suivantes sont en outre de préférence adoptées:
- selon une première variante de réalisation, l'organe d'étanchéité reçu dans la gorge du premier corps de piston est constitué par un anneau fermé;
- dans ce cas, soit que ledit anneau est déformable radialement et est mis en place dans la gorge du premier corps de piston par glissement sur la deuxième partie de la deuxième face cylindrique du premier corps de piston, avec déformation radiale lors dudit glissement, soit que la deuxième partie de la deuxième surface cylindrique du premier corps de piston est excentrée par rapport à l'axe de piston qui constitue l'axe de la première partie de ladite deuxième surface cylindrique et a une périphérie radiale dont la longueur est sensiblement égale à celle de la périphérie radiale interne dudit anneau;
- selon une deuxième variante de réalisation, l'organe d'étanchéité est constitué par un segment muni d'une fente.

L'avantage principal des dispositions conformes à l'invention réside dans le fait que, le piston comprenant deux parties du guidage, a un coulissement très régulier et bien guidé, de sorte qu'il est possible, sans réduction dommageable de cette faculté de glissement, de choisir des dimensions radiales de la deuxième partie de la deuxième surface cylindrique, inférieures à celles de la première partie.

En outre, en choisissant des dimensions radiales de la deuxième partie de la face cylindrique du piston inférieures à celles de la première partie, cette deuxième partie est disposée en retrait, hors de contact de la paroi du cylindre, de sorte qu'il n'est plus nécessaire d'en effectuer les coûteux rayonnage et ébavurage antérieurs. De plus, la deuxième partie de la deuxième surface cylindrique du premier corps de pistons n'étant plus au contact de la paroi du premier cylindre, cette paroi peut avoir une surface de raccordement avec l'épaulement transversal, dont l'usinage est simplifié et qui possède un grand rayon de raccordement.

L'invention sera mieux comprise et des caractéristiques secondaires et leurs avantages apparaîtront au cours de la description de réalisations données ci-dessous à titre d'exemple.

Il est entendu que la description et les dessins ne sont donnés qu'à titre indicatif et non limitatif.

Il sera fait référence aux dessins annexés, dans lesquels:
- la figure 1 est une coupe axiale d'un moteur hydraulique à cylindres disposés radialement, comportant des pistons conformes à l'invention, selon une première variante de réalisation;
- la figure 2 est une coupe transversale, dans un plan perpendiculaire à l'axe de rotation, d'un piston du moteur de la figure 1, contenu dans un cylindre dudit moteur;
- la figure 3 est une vue suivant III-III de la figure 2;
- la figure 4 est une vue analogue à celle de la figure 3, du piston et de son anneau d'étanchéité dans la configuration précédant la mise en place du piston à l'intérieur du cylindre;
- la figure 5 est une coupe analogue à celle de la figure 2, représentant une variante de piston utilisable dans le moteur de la figure 1;
- la figure 6 représente un premier type d'organe d'étanchéité susceptible d'équiper les pistons représentés sur les figures 2, 3 ,4 et 5;
- la figure 7 représente un deuxième type d'organe d'étanchéité susceptible d'équiper les pistons montés dans le moteur de la figure 1, notamment le piston représenté sur la figure 5.

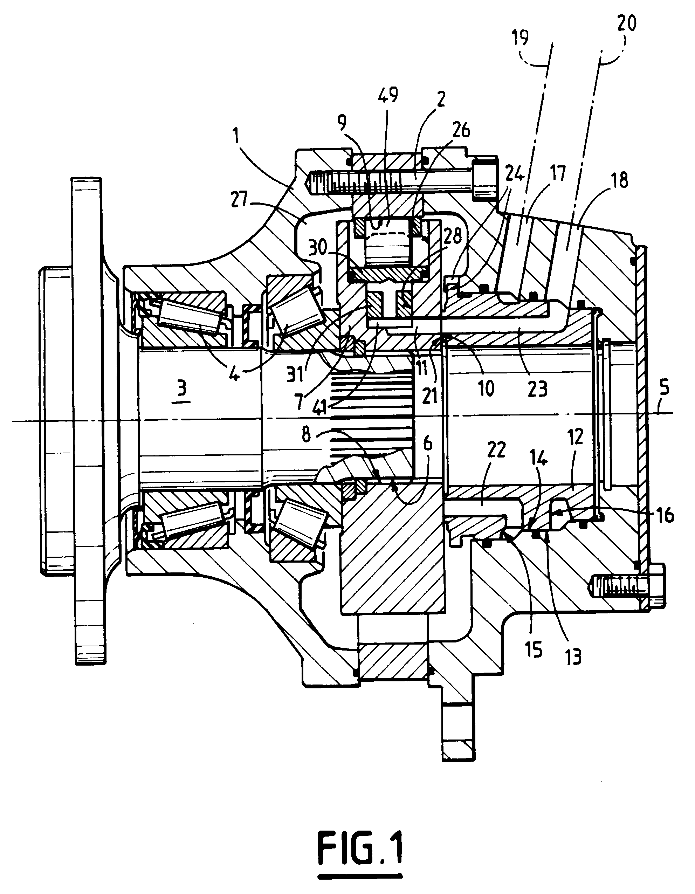

Le moteur hydraulique de la figure 1 comprend:
- un carter 1, en plusieurs parties assemblées par des vis 2,
- un arbre de sortie 3, monté à rotation par rapport au carter 1, autour d'un axe de rotation 5, au moyen de deux paliers à rouleaux 4, et muni de cannelures internes 6;
- un bloc-cylindres 7, comportant un alésage muni de cannelures 8, rendu solidaire de l'arbre de sortie 3 vis-à-vis de la rotation d'axe 5, par imbrication des cannelures 8 avec les cannelures 6;
- une périphérie interne du carter constituant une came ondulée 9;
- une face de communication 10, plane, perpendiculaire à l'axe de rotation 5, appartenant au bloc-cylindres 7;
- des conduits de cylindre 11 reliant, chacun, une chambre de travail 41 d'un fluide sous pression, ménagée dans le bloc-cylindres 7, à la face de communication 10, les divers conduits de cylindre 11 débouchant dans ladite face de communication par des orifices centrés sur un même cercle d'axe 5;
- un distributeur interne de fluide 12, qui comporte une face cylindrique 13 présentant plusieurs épaulements, radialement décalés, de forme complémentaire de celle d'un évidement 14 que comporte le carter 1;
- deux gorges 15, 16 ménagées dans le distributeur interne de fluide 12, débouchant dans sa face cylindrique 13;
- deux conduits internes 17, 18 ménagés dans la paroi du carter 1, reliant les gorges 15, 16 à des conduits externes 19, 20 d'alimentation en fluide sous pression et d'échappement de fluide, respectivement, ces conduits 19, 20 étant reliés à un distributeur externe de fluide assurant sélectivement la mise en communication de l'un avec une source de fluide sous pression et de l'autre avec un réservoir de décharge;
- une face de distribution 21, plane, perpendiculaire à l'axe de rotation 5, appartenant au distributeur interne de fluide 12, maintenue en appui sensiblement étanche sur la face de communication 10, par exemple, de manière connue en soi, par des ressorts;
- des conduits de distribution 22, 23 reliés aux gorges 15, 16, respectivement, ménagés dans le distributeur interne de fluide 12, et débouchant dans sa face distribution 21 par des orifices centrés sur le même cercle que les orifices des conduits de cylindres, en étant en outre alternés (un orifice d'un conduit de distribution 22 succédant à un orifice d'un conduit de distribution 23, lui-même succédant à un orifice d'un conduit de distribution 22, etc....);
- un dispositif 24 de pions et d'encoches rendant solidaires, vis-à-vis de la rotation d'axe 5, le distributeur interne de fluide 12 du carter 1.

Les dispositions des conduits de cylindre 11 et des conduits de distribution 22, 23 sont telles, que chaque conduit de cylindre 11 communique alternativement avec un conduit de distribution 22, puis avec un conduit de distribution 23, puis de nouveau avec un conduit de distribution 22, au cours de la rotation relative du bloc-cylindres 7 par rapport au distributeur interne de fluide 12.

Le moteur de la figure 1 présente en outre des particularités, qui sont mises en évidence en regard des figures 1 à 4.

Une pluralité de premiers cylindres est ménagée dans le bloc-cylindres 7, ces premiers cylindres ayant des axes 25 sensiblement radiaux par rapport à l'axe de rotation 5, angulairement régulièrement espacés autour de l'axe de rotation 5, possédant une première surface cylindrique 26 de diamètre D26, et débouchant à l'extérieur du bloc-cylindres 7, dans l'enceinte 27 délimitée par le carter 1, à l'intérieur de laquelle est disposé ledit bloc-cylindres.

Une pluralité de deuxièmes cylindres 28 est également ménagée dans le bloc-cylindres, chaque deuxième cylindre 28 ayant même axe 25 que l'un des premiers cylindres, étant disposé entre ledit premier cylindre et l'axe de rotation 5 et ayant un diamètre D28 inférieur au diamètre D26 de la première surface cylindrique 26. Un épaulement 29, perpendiculaire à l'axe 25 desdits premier et deuxième cylindres, relie la première surface cylindrique 26 au deuxième cylindre 28.

Un piston, comprenant un premier corps de piston 30 et un deuxième corps de piston 31 est monté coulissant à l'intérieur des premier et deuxième cylindres, une face transversale 32 du premier corps de piston 30, perpendiculaire à l'axe 25, reliant les faces externes des premier et deuxième corps de piston, et le deuxième corps de piston 31 étant solidaire du premier corps de piston 30 et en constituant un prolongement.

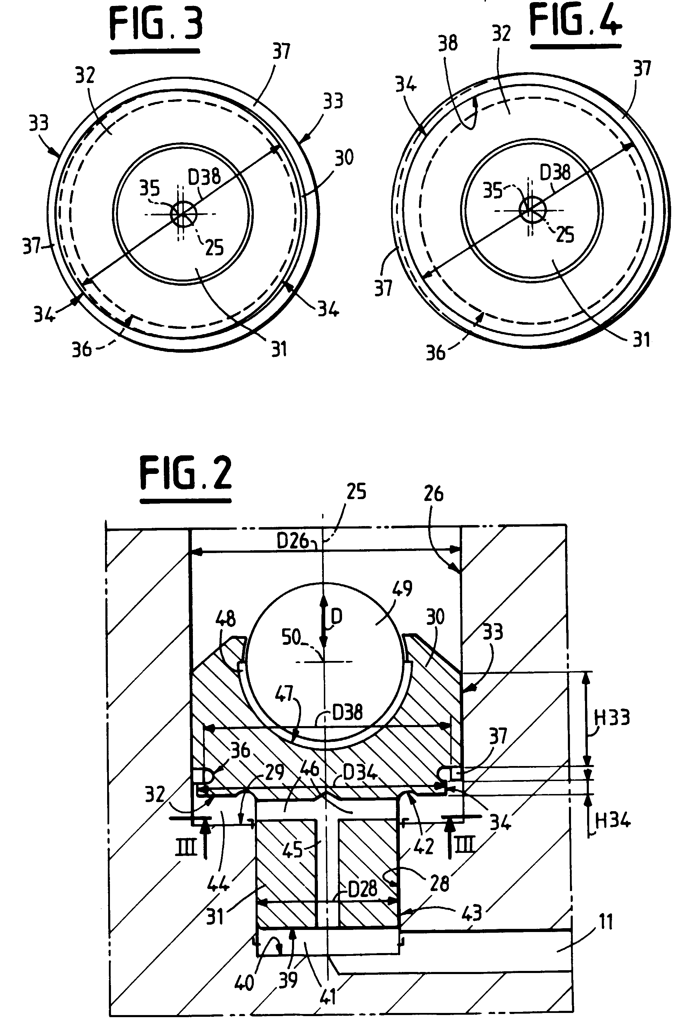

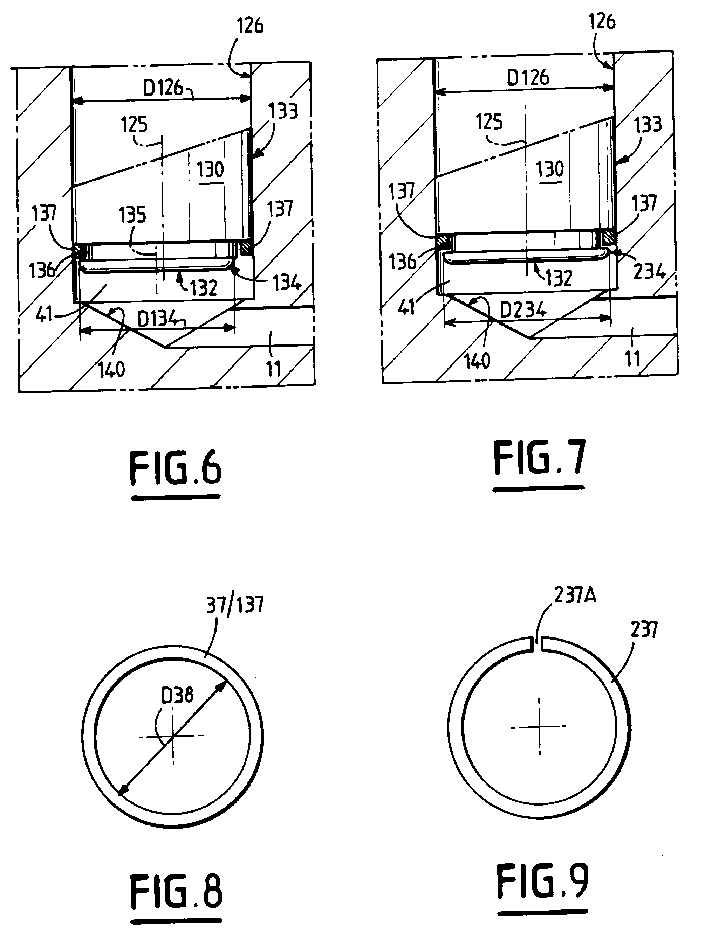

Le premier corps de piston 30 est délimité par une deuxième surface cylindrique présentant elle-même une première partie 33, de diamètre sensiblement égal à D26, au jeu près de fonctionnement permettant le coulissement du premier corps de piston 30 en regard de la première surface cylindrique D26, constituant une face de guidage du piston à l'intérieur du premier cylindre, ayant une hauteur H33 déterminée, et, une deuxième partie 34, en l'espèce cylindrique, de diamètre D34 inférieur au diamètre D26, et ayant une hauteur H34 notablement inférieure (comprise entre 0,15 et 0,20 H33) à la hauteur H33 de la première partie 33. De plus, cette deuxième partie 34 est entièrement en retrait par rapport, et sans contact avec la première surface cylindrique 26. En outre, dans le cas de la réalisation des figures 1 à 4, la deuxième partie 34, de section circulaire, a son axe 35 non confondu avec l'axe 25: elle est excentrée par rapport à l'axe 25. Une gorge 36, transversale par rapport à l'axe 25, sépare les première 33 et deuxième 34 parties, et reçoit un anneau d'étanchéité fermé 37, tel que celui représenté sur la figure 6. La hauteur H34 de la deuxième partie 34 a pour seul but de permettre la constitution de la gorge 36. En aucun cas, la deuxième partie 34 ne doit être en contact avec la première surface cylindrique 26. Dans la réalisation représentée, cet anneau 37 possède une périphérie interne 38, dont le diamètre D38 est égal ou légèrement supérieur au diamètre D34 de la deuxième partie 34, l'anneau étant libre, sans contrainte, de sorte que, pour le montage de l'anneau 37 dans la gorge 36, il suffit, avant l'introduction du piston dans le cylindre, de présenter (figure 4) l'anneau 37 en regard de la surface de la deuxième partie 34, de pousser axialement (parallèlement à l'axe 35) l'anneau jusqu'à le placer en regard de la gorge 36, pour qu'il puisse pénétrer librement dans cette gorge 36. Le montage de la première partie 33 dans le premier cylindre réalise le centrage de l'anneau 37 par rapport à l'axe 25 et fait effectivement pénétrer l'anneau dans la gorge 25 et y être maintenu par la deuxième partie 34 (figures 2 et 3), assurant l'étanchéité entre le piston et le cylindre.

Le deuxième corps de piston 31 a une face cylindrique 43 de diamètre égal au diamètre D28 du deuxième cylindre 28, au jeu près permettant le coulissement du deuxième corps de piston 31 par rapport à la face cylindrique 28, et constitue donc un élément complémentaire de guidage du piston lors de son coulissement suivant la direction D parallèle à l'axe 25. Son extrémité opposée au premier corps de piston 30 est constituée par une face transversale 39 perpendiculaire à l'axe 25, qui délimite, avec le deuxième cylindre 28 et son fond 40, la chambre 41 de travail d'un fluide sous pression. A l'opposé de la face 39, une gorge de raccordement 42 réalise le raccordement de la face transversale 32 du premier corps de piston 30 avec la face cylindrique 43 du deuxième corps de piston 31. Par ailleurs, la face transversale 32 délimite, avec la première surface cylindrique 26 et l'épaulement 29 une chambre complémentaire 44. Les chambres 41 et 44 communiquent: dans la réalisation représentée, un conduit 45, coaxial à l'axe 25, est ménagé dans le deuxième corps de piston 31, et débouche, d'une part, dans la chambre 41, d'autre part dans deux conduits transversaux 46, qui, eux-mêmes débouchent dans la chambre 44 au voisinage de la gorge de raccordement 42. De cette manière, les deux chambres 41 et 44 sont équivalentes à une chambre unique qui serait délimitée par un piston de diamètre D26. A noter que le diamètre D28 du deuxième cylindre 28 et par conséquent du deuxième corps de piston 31, est inférieur au diamètre D26 de la première surface cylindrique, et, également inférieur au diamètre D34 de la deuxième partie 34 de la deuxième surface cylindrique.

L'extrémité du premier corps de piston 30 la plus éloignée du deuxième corps de piston 31 est conformée en un palier 47, qui reçoit un coussinet 48 support d'un rouleau 49 d'axe 50 perpendiculaire à l'axe 25, ce rouleau 49 constituant un organe d'appui du piston sur la came 9.

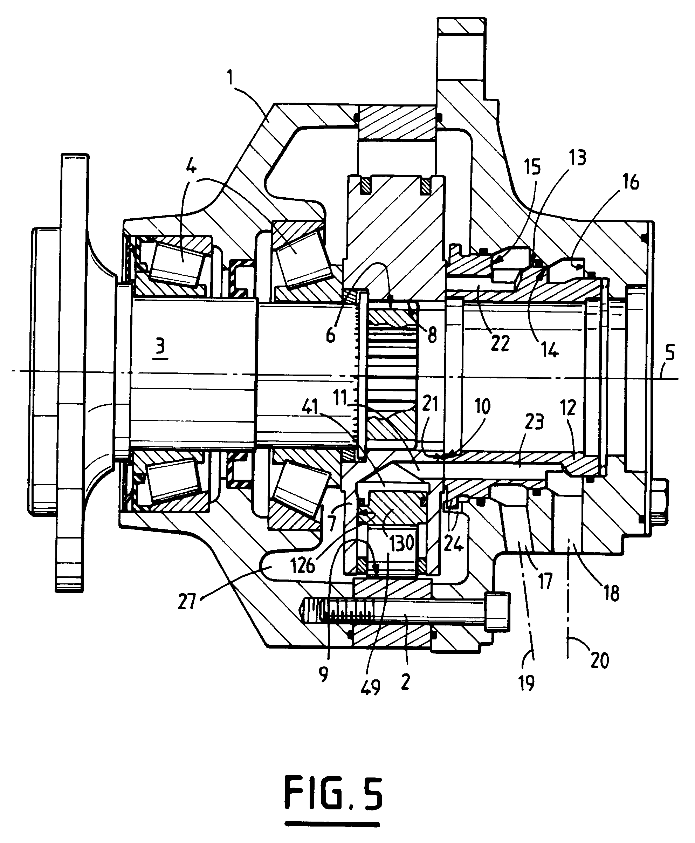

En variante de la réalisation de la figure 2, et par conséquent aussi, en variante de celle des figures 1, 3 et 4, il est possible de remplacer la deuxième partie excentrée 34 par une deuxième partie 134 coaxiale à la première partie 33 (figure 5). Comme dans les réalisations déjà décrites, la deuxième partie 134 est en retrait par rapport à la surface 26 du cylindre, et sans aucun contact avec elle, ayant un diamètre D134 inférieur au diamètre D26. Et il reste possible d'adopter un anneau d'étanchéité fermé. Par contre, il faut prévoir de le monter dans la gorge 136 par déformation radiale élastique, pendant son passage d'introduction sur la deuxième partie 134 de la surface cylindrique du piston. Dans cette réalisation, l'anneau 137 (figure 6) est réalisé soit en un matériau plastique, soit en un alliage métallique, mais utilisé en faible épaisseur, et présentant l'élasticité suffisante permettant le montage.

Enfin, il reste encore possible dans la réalisation des figures 1 à 4, et dans celle de la figure 5, de remplacer l'anneau 37 ou 137, par un segment 237, muni d'une fente 237A (figure 7). Dans cette variante, le mode de montage du segment dans la gorge du piston est indifférent.

Quelque soit les réalisations décrites, dans chacune d'elles le guidage du coulissement du piston, parallèlement à la direction D, est réalisé par la première partie 33 et par la surface cylindrique 43 du deuxième corps de piston 31, mais n'est jamais assuré par la deuxième partie 34; 134, qui n'est jamais en contact avec la première face cylindrique 26 du cylindre et qui ne sert qu'à maintenir en place l'organe d'étanchéité 37; 137; 237. Du fait que le contact a été supprimé entre cette deuxième partie 34; 134; et le cylindre, il est possible d'éviter tout usinage de finition de cette deuxième partie, autrefois indispensable pour enlever les bavures du premier usinage. D'autre part, la deuxième partie de la deuxième surface cylindrique du premier corps de piston n'étant plus au contact de la paroi du premier cylindre, cette paroi peut avoir une surface de raccordement avec l'épaulement transversal, dont l'usinage est simplifié et qui possède un grand rayon de raccordement.

Par ailleurs, le montage de l'anneau d'étanchéité conforme à la réalisation des figures 1 à 4 permet l'utilisation d'anneaux 37 peu élastiques, puisqu'au moment du montage ils ne subissent aucune déformation.

L'invention n'est pas limitée aux réalisations décrites, mais en couvre au contraire toutes les variantes qui pourraient leur être apportées sans sortir de leur cadre.

## Revendications

1. Dans un moteur hydraulique comportant un bloc-cylindres (7) à l'intérieur duquel est ménagé au moins un premier cylindre délimité par une première surface cylindrique (26),
un piston qui comporte au moins un premier corps de piston (30) qui est monté coulissant à l'intérieur dudit premier cylindre parallèlement à une direction de coulissement (D), qui possède un axe de piston (25) parallèle à la direction de coulissement, et qui présente une deuxième surface cylindrique (33) disposée en regard de ladite première surface cylindrique et une face transversale (32) délimitant à l'intérieur du premier cylindre une chambre (41) de travail d'un fluide susceptible de contenir sélectivement un fluide sous pression, ledit premier corps de piston possédant une gorge (36;136) disposée transversalement par rapport à l'axe de piston et susceptible de recevoir un organe d'étanchéité (37;137;237) disposé entre ce premier corps de piston et ladite première surface cylindrique, la deuxième surface cylindrique du premier corps de piston comprenant une première (33) et une deuxième (34;134) partie disposées de part et d'autre de ladite gorge, la première partie (33) de la deuxième surface cylindrique s'étendant à partir de la gorge dans la direction opposée à ladite face transversale (32), présentant, au jeu près permettant le coulissement du premier corps de piston, des dimensions radiales égales à celles (D26) de la première surface cylindrique (26), et constituant ainsi un élément de guidage du premier corps de piston (30) à l'intérieur du premier (26) cylindre, caractérisé en ce que, la deuxième partie (34;134) de la deuxième surface cylindrique s'étend entre lesdites gorge (26) et face (32) transversales et présente des dimensions radiales (D34;D134) inférieures à celles (D26) de ladite première partie de la deuxième surface cylindrique, et
en ce qu'un deuxième cylindre (28) est ménagé dans ledit bloc-cylindres et a des dimensions radiales (D28) inférieures à celles (D26) du premier cylindre et inférieures également à celles (D34) de la deuxième surface cylindrique du premier corps de piston, cependant que ledit piston comprend un deuxième corps de piston (31), qui est solidaire du premier corps de piston (30) et le prolonge à partir de ladite face transversale (32) de ce premier corps de piston, qui est monté coulissant dans le deuxième cylindre, qui, au jeu près permettant le coulissement de ce deuxième corps de piston dans le deuxième cylindre, présente des dimensions radiales (D28) égales à celles du deuxième cylindre, et qui, ainsi, constitue un élément de guidage complémentaire du coulissement du piston par rapport au deuxième cylindre.

2. Piston selon la revendication 1,
caractérisé en ce que l'organe d'étanchéité reçu dans la gorge du premier corps de piston est constitué par un anneau fermé (37;137).

3. Piston selon la revendication 2,
caractérisé en ce que ledit anneau (137) est déformable radialement et est mis en place dans la gorge (136) du premier corps de piston par glissement sur la deuxième partie (234) de la deuxième surface cylindrique du premier corps de piston (130), avec déformation radiale lors dudit glissement.

4. Piston selon la revendication 2,
caractérisé en ce que la deuxième partie (34;134) de la deuxième surface cylindrique du premier corps de piston (30;130) est excentrée (35;135) par rapport à l'axe de piston (25;125) qui constitue l'axe de la première partie (33;133) de ladite deuxième surface cylindrique et a une périphérie radiale dont la longueur (D34;D134) est sensiblement égale à celle de la périphérie radiale interne (D38) dudit anneau (37).

5. Piston selon la revendication 1,
caractérisé en ce que l'organe d'étanchéité est constitué par un segment (237) muni d'une fente (237A).

## Patentansprüche

1. Bei einem Hydraulikmotor, der einen Zylinderblock (7) aufweist, in dessen Innerem wenigstens ein von einer ersten zylindrischen Fläche (26) begrenzter, erster Zylinder angeordnet ist,
ein Kolben, der wenigstens einen ersten Kolbenkörper (30) aufweist, der gleitend innerhalb des ersten Zylinders parallel zu einer Gleitrichtung (D) angeordnet ist, der eine Kolbenachse (25) parallel zur Gleitrichtung besitzt und der eine zweite zylindrische Fläche (33), die gegenüber der ersten zylindrischen Fläche angeordnet ist, und eine Querseite (32) aufweist, die im Inneren des ersten Zylinders eine Arbeitskammer (41) einer Flüssigkeit begrenzt, die wahlweise eine Flüssigkeit unter Druck enthalten kann, wobei der erste Kolbenkörper eine Vertiefung (36;136) besitzt, die quer bezüglich der Kolbenachse angeordnet ist und ein Abdichtungselement (37;137;237), das zwischen dem ersten Kolbenkörper und der ersten zylindrischen Fläche angeordnet ist, aufnehmen kann, wobei die zweite zylindrische Fläche des ersten Kolbenkörpers einen ersten (33) und zweiten (34;134) Teil aufweist, die beiderseits der Vertiefung angeordnet sind, wobei der erste Teil (33) der zweiten zylindrischen Fläche sich von der Vertiefung in die Richtung erstreckt, die der Querseite (32) abgewandt ist, welcher erste Kolbenkörper radiale Abmessungen aufweist, die, mit einem engen Spiel, das das Gleiten des ersten Kolbenkörpers ermöglicht, denen (D26) der ersten zylindrischen Fläche (26) gleich sind, und so ein Führungselement des ersten Kolbenkörpers (30) im Inneren des ersten (26) Zylinders bildet, dadurch gekennzeichnet, daß der zweite Teil (34;134) der zweiten zylindrischen Fläche sich zwischen der Quervertiefung (26) und der Querseite (32) erstreckt und radiale Abmessungen (D34;D134) aufweist, die kleiner sind als diejenigen (D26) des ersten Teils der zweiten zylindrischen Fläche, und
daß ein zweiter Zylinder (28) in dem Zylinderblock angeordnet ist mit radialen Abmessungen (D28), die kleiner sind als diejenigen (D26) des ersten Zylinders und kleiner auch als diejenigen (D34) der zweiten zylindrischen Fläche des ersten Kolbenkörpers, während der Kolben einen zweiten Kolbenkörper (31) aufweist, der mit dem ersten Kolbenkörper (30) fest verbunden ist und diesen von der Querseite (32) dieses ersten Kolbenkörpers aus verlängert, und der gleitend im zweiten Zylinder montiert ist, welcher zweite Kolbenkörper radiale Abmessungen (D28) aufweist, die, mit einem engen Spiel, das das Gleiten des zweiten Kolbenkörpers im zweiten Zylinder ermöglicht, denen des zweiten Zylinders gleich sind, und der so ein Führungselement bildet, das komplementär zum Gleiten des Kolbens bezüglich des zweiten Zylinders ist.

2. Kolben nach Anspruch 1, dadurch gekennzeichnet, daß das in der Vertiefung des ersten Kolbenkörpers aufgenommene Abdichtungselement durch einen geschlossenen Ring (37;137) gebildet ist.

3. Kolben nach Anspruch 2, dadurch gekennzeichnet, daß der Ring (137) radial verformbar ist und in der Vertiefung (136) des ersten Kolbenkörpers an seinem Platz durch Gleiten auf dem zweiten Teil (234) der zweiten zylindrischen Fläche des ersten Kolbenkörpers (130), mit radialer Verformung bei diesem Gleiten, angebracht wird.

4. Kolben nach Anspruch 2, dadurch gekennzeichnet, daß der zweite Teil (34;134) der zweiten zylindrischen Fläche des ersten Kolbenkörpers (30;130) bezüglich der Kolbenachse (25;125), die die Achse des ersten Teils (33;133) der zweiten zylindrischen Fläche bildet, versetzt ist und einen radialen Umfang aufweist, dessen Länge (D34;D134) im wesentlichen gleich derjenigen des inneren radialen Umfangs (D38) des Rings (37) ist.

5. Kolben nach Anspruch 1, dadurch gekennzeichnet, daß das Abdichtungselement durch ein mit einem Schlitz (237A) ausgestatteten Segment (237) gebildet ist.

## Claims

1. In a hydraulic motor comprising a cylinder block (7) within which is formed at least one first cylinder delimited by a first cylindrical surface (26), a piston which comprises at least one first piston body (30) which is mounted slidably within said first cylinder parallel to a direction of sliding (D), which has a piston axis (25) parallel to the direction of sliding, and which exhibits a second cylindrical surface (33) arranged opposite said first cylindrical surface and a transverse face (32) delimiting within the first cylinder a fluid work chamber (41) capable of containing selectively a pressurised fluid, said first piston body having a groove (36; 136) arranged transversely relative to the piston axis and capable of receiving a sealing member (37; 137; 237) arranged between this first piston body and said first cylindrical surface, the second cylindrical surface of the first piston body including a first portion (33) and a second portion (34; 134) arranged on either side of said groove, the first portion (33) of the second cylindrical surface extending from the groove in the direction opposite said transverse face (32), having, except for the clearance allowing sliding of the first piston body, radial dimensions equal to those (D26) of the first cylindrical surface (26), and thus forming a guide element for the first piston body (30) within the first cylinder (26), characterised in that the second portion (34; 134) of the second cylindrical surface extends between said transverse groove (26) and transverse face (32) and has radial dimensions (D34; D134) less than those (D26) of said first portion of the second cylindrical surface, and in that a second cylinder (28) is formed in said cylinder block and has radial dimensions (D28) less than those (D26) of the first cylinder and also less than those (D34) of the second cylindrical surface of the first piston body, while said piston includes a second piston body (31), which is rigidly connected to the first piston body (30) and prolongs it from said transverse face (32) of this first piston body, which is mounted slidably in the second cylinder, which, except for the clearance allowing sliding of this second piston body in the second cylinder, has radial dimensions (D28) equal to those of the second cylinder, and which thus forms a complementary guide element for sliding of the piston relative to the second cylinder.

2. Piston according to claim 1, characterised in that the sealing member received in the groove of the first piston body consists of a closed ring (37; 137).

3. Piston according to claim 2, characterised in that said ring (137) is deformable radially and is positioned in the groove (136) of the first piston body by sliding over the second portion (234) of the second cylindrical surface of the first piston body (130), with radial deformation during said sliding.

4. Piston according to claim 2, characterised in that the second portion (34; 134) of the second cylindrical surface of the first piston body (30; 130) is eccentric (35; 135) relative to the piston axis (25; 125) which forms the axis of the first portion (33; 133) of said second cylindrical surface and has a radial periphery of which the length (D34; D134) is substantially equal to that of the inner radial periphery (D38) of said ring (37).

5. Piston according to claim 1, characterised in that the sealing member consists of a segment (237) provided with a slot (237A).
